Europäisches Patentamt

European Patent Office

Office européen des brevets

(19)

(11) Publication number: **0 161 916**
A2

(12) **EUROPEAN PATENT APPLICATION**

(21) Application number: **85303298.5**

(22) Date of filing: **09.05.85**

(51) Int. Cl.⁴: **F 16 B 13/06**

(30) Priority: **11.05.84 US 609484**
**08.04.85 US 720589**

(43) Date of publication of application: **21.11.85**
**Bulletin 85/47**

(84) Designated Contracting States: **AT BE CH DE FR GB IT LI LU NL SE**

(71) Applicant: **GLI Industries, Inc., 423 West 800 North, Salt Lake City Utah 84103 (US)**

(72) Inventor: **Graham, Charles H., 7281 South 3080 East, Salt Lake City Utah 84121 (US)**

(74) Representative: **Rushton, Ronald, SOMMERVILLE & RUSHTON 11 Holywell Hill, St. Albans Hertfordshire AL1 1EZ (GB)**

(54) **Reusable anchor bolt assembly.**

(57) An anchor bolt assembly includes a sleeve-like expander made of a resilient material, an end plate attached to the distal or innermost end of the expander, a flange mounted on the proximal or outermost end of the expander, and a fastener. In use, the assembly serves to anchor an object to a substrate, such as a wall. The fastener is inserted through a longitudinal opening in the expander and threadably engages the end plate in order to apply an axial compression force to the expander, which force causes the resilient expander to bulge outward to contact the inside surface of an opening in the substrate. This longitudinal compression and transverse expansion of the expander causes the assembly to be securely anchored in the substrate opening. The flange provides a wide base against which the axial compression force generated by the fastener and end plate can act. In one embodiment, the flange is integral with the resilient expander, while in a second ambodiment the flange is non-resilient to provide additional support to the fastener and prevent the cold flow of the expander material. Advantageously, the anchor bolt assembly is reusable and can be utilized in conjunction with a wide variety of substrate materials and thicknesses.

-1-

## REUSABLE ANCHOR BOLT ASSEMBLY

### Background of the Invention

This invention relates to an anchor bolt assembly for anchoring an object to assorted surfaces. Present day anchor bolts can be classified into two groups according to the type of building material into which they are inserted. One group of anchor bolts, namely molly bolts and toggle bolts, is specifically designed for mounting objects on hollow surfaces, such as those typically found in residences. These hollow-wall anchor bolts include a cylindrical sleeve having a series of circumferentially spaced, longitudinal slits. Each sleeve also includes an annular groove, which serves as an area of weakness, in the middle of the sleeve. After insertion of the bolt and sleeve assembly into a hollow wall, the bolt is tightened causing the weakened groove area in the sleeve to bend and fan outward behind the wall. As the sleeve fans outwardly a series of petals are formed by the longitudinal slits in the sleeve. After the metal between the slits fans outward, further tightening of the toggle or molly bolt causes the petals to abut the inside surface of the wall. When tightened further, a clamping force is created between the object mounted on the front of the wall and the petals formed behind the wall.

Toggle bolts and molly bolts have several shortcomings. First, they are not reusable. When the toggle bolt or molly bolt is tightened, the sleeve is permanently or plastically deformed. Neither the toggle or molly bolt can be used over again. Secondly, the sleeve cannot be removed from the hollow wall without creating a gaping hole larger than the hole in which the bolt was mounted originally. Furthermore, toggle bolts

0161916

-2-

and molly bolts do not apply a uniform circumferential force to the inside surface of the wall. Since there is space between the petals of the deformed sleeve, the clamping force is applied unevenly to the surface of the wall.

The second group of anchor bolts, namely, lead anchors, lag bolts and expandable slit plastic sleeves, are for mounting objects to solid surfaces. A lead anchor consists of a cylindrical lead plug with an opening therein. The lead plug is placed in an opening in a surface and a punch is forced into the opening of the plug by hammering the opposite end of the punch. The punch deforms the lead plug during insertion and wedges the lead plug against the inside of the opening in the surface. The lead anchor has several disadvantages among which are that the opening is subjected to shock loading during installation, the amount of expansion is limited, the lead anchor is not reusable and there is difficulty in removing the lead anchor.

A lag bolt consists of a large threaded member having a hexagonally-shaped head. Lag bolts are generally used to mount objects to solid wooden surfaces. The lag bolt has several disadvantages, among which include the possibility of splitting decorative wooden surfaces and the high torque required to install the lag bolt into wood. Expandable slit plastic sleeves consist of a threaded plastic sleeve with longitudinal slits. As a fastener is placed in the sleeve, it acts as a wedge to break the sleeve along the slits, forcing the resulting longitudinal plastic pieces against the inside surface of the opening. Like toggle bolts and molly bolts, the expandable sleeve also suffers from the disadvantage of applying a non uniform pressure on the inside surface of the opening. Expandable sleeves are also not reusable.

Another shortcoming inherent in both of these groups of anchor bolts is that they have rather specific applications for either hollow surfaces or various solid surfaces. A molly bolt or toggle bolt cannot be used effectively in a solid surface since the petals cannot expand outward. Lag bolts are ineffective in a hollow surface. The expandable slit sleeve and lead anchor have little holding force in a hollow surface since the depth of any opening is limited by the thickness of the wall. They are better suited for solid walls. Since the several types of anchors have very specific applications, it follows that contractors and hardware stores must carry several types of anchor bolts for the various types of applications.

## Summary of the Invention

Thus, it can be seen that there is a need for a reusable anchor assembly for application in either a solid or hollow surface. There is also a need for an anchor bolt that applies a uniform amount of pressure about an opening in the surface

The reusable anchor assembly of the present invention cures the shortcomings discussed above. The assembly is comprised of an expander and a threaded fastener. The expander has a tubular body made of resilient elastic material with an end plate attached to the distal end, which is the inner-most end of the assembly. The opposite or proximal end of the expander body is comprised of a flange which engages the object or workpiece to be anchored to the surface. The end plate is also threaded and engages the threaded fastener. The fastener passes through an object or workpiece in the tubular body of the expander and then threadably engages the end plate. As the fastener engages the end plate, an axial compression force is placed on the tubular body. This compression force is reacted by the flange acting against the workpiece, with the flange serving as a broad support for the compression force in order to prevent slippage and damage to the workpiece. Eventually, when the axial load

-4-

is large enough, the tubular body buckles and bulges out from the shaft of the fastener.

In application, the assembly is placed in an opening preferably slightly larger than its uncompressed outside diameter. When the tubular body buckles it urges against the inside surface of the opening in which it is placed. Increasing the axial load results in an increased outwardly acting expansion force on the inside surface of the opening.

The resilient, elastic material of the tubular body portion of the anchor assembly also has a high coefficient of friction, resulting in a force which resists the withdrawal of the anchor assembly from the opening. The material used to construct the tubular body of the anchor assembly is elastic and resilient and, therefore, regains its shape after the axial force is relieved. As a result, the present anchor assembly is reusable.

In one embodiment, the flange is integral with the resilient expander and is part of the mold from which the expander is injection molded. In this embodiment, the end plate is a solid, non-resilient and preferably metal member which is placed in the mold prior to injection of the resilient polymer material from which the expander is manufactured.

In a second embodiment, the flange and end plate are each non-resilient and are manufactured separately from the expander. They are then press fit onto a pair of fittings formed at each end of the expander. This embodiment has the advantage of providing additional support to the fastener and the sealing off of cold flow pathways of the expander material. This advantage maintains the long term holding pressure of the assembly. In this embodiment, the manufacturer of the expander is also facilitated by the elimination of the need to manually place the end plate into the molding die, thus resulting in an increased production rate.

-5-

<u>Brief Description of the Drawings</u>

FIGURE 1 is an exploded perspective view of the reusable anchor bolt assembly of a first embodiment illustrating a resilient flange integral with the expander;

FIGURE 2 is a cross-sectional view of the expander taken along line 2-2 of FIGURE 1;

FIGURE 3 is an exploded perspective view of a reusable anchor bolt assembly of a second embodiment illustrating a non-resilient end plate and flange; and

FIGURE 4 is a cross-sectional view of the expander of this second embodiment illustrating the fully-assembled anchor assembly.

<u>Description of the Preferred Embodiment</u>

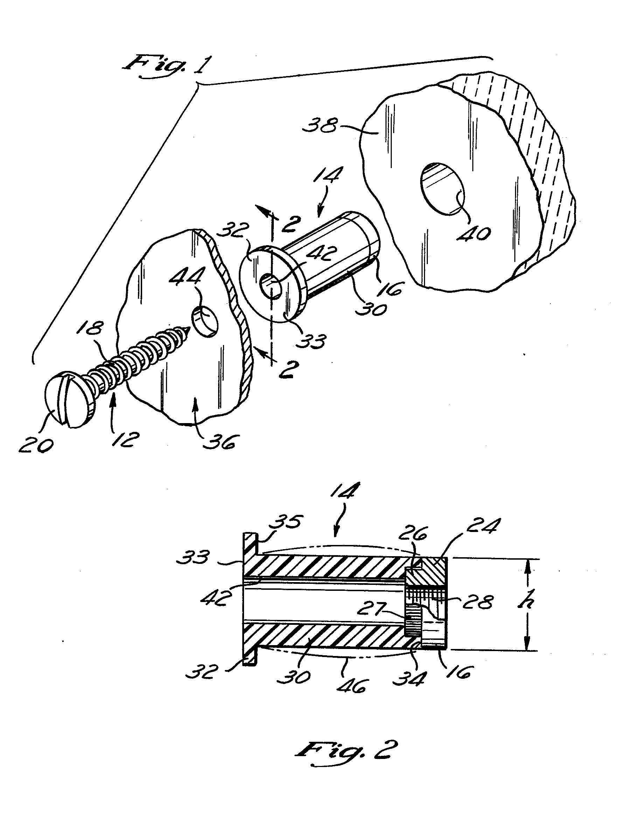

Referring to FIGURE 1, the reusable anchor assembly can be used to attach a workpiece 36 or other object to a surface 38. The reusable anchor assembly is inserted through the workpiece 36 and positioned in an opening 40 in the surface 38. The surface 38 or substrate can be a wall, ceiling, floor or the like and can be hollow, as in the case of a sheetrock wall, or the surface can be solid, as in the case of a concrete wall. The reusable anchor assembly comprises a threaded fastener 12 and expander 14. The expander 14 is, in turn, comprised of an end plate 16, such as a threaded nut, and a tubular body 30. The fastener 12, in the preferred embodiment, is a well-known wood or sheet metal screw which includes a threaded shaft portion 18 and an enlarged head 20. It should be understood that a machine screw or any other type of screw could also be used as the fastener.

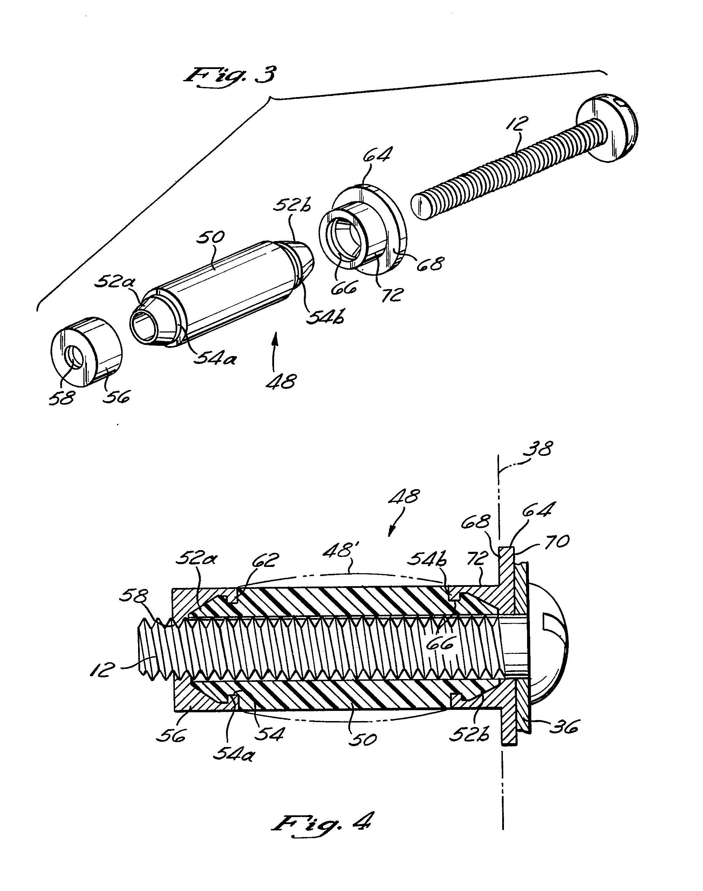

Referring to FIGURES 1 and 2, the end plate 16 is integrally attached to the tubular body 30 by molding, adhesive or some other suitable means thereby allowing the tubular body 30 and end plate 16 to cooperate. The end plate 16 is comprised of a pair of coaxial cylinders, including a large cylinder 24 attached to a small cylinder 26. The difference in outside diameters of the cylinders 24 and 26 forms a ledge 34. A cylindrical opening 28 passes through the common axis of both cylinders 24 and 26. The inside surface of this opening 28 is threaded so as to threadably engage the shaft portion 18 of the fastener 12. The small cylinder 26 is knurled on its outer surface around its perimeter as indicated at 27. Although the end plate 16 in the preferred embodiment is comprised of two cylinders, it should be understood that a number of shapes and dimensions could produce an end plate that would function properly.

Again referring to FIGURES 1 and 2, the tubular body 30 of the expander 14 has a sleeve-like configuration and a flange 32. In this embodiment, the flange 32 is integral with the body 30 of the expander 14, being injection molded from a resilient, polymer material, although other materials and manufacturing processes may be successfully used. As can be seen from the drawings, the outer-most surface 33 of the flange abuts the workpiece 36 while the inner-most surface 35 abuts the surface 38 surrounding the opening 40. The inner-most surface 35 of the flange 32 provides and anchor for the assembly, preventing it from disappearing completely into the opening 40 and providing a surface against which the axial compression forces can act as explained in more detail below. The outer surface 33 of the flange 32 provides a base or a support surface against which the object 36 can be mounted to prevent slippage and damage to the workpiece.

The body 30 of the expander 14 has an inside diameter slightly larger than the outside diameter of the threaded shaft portion 18 of the fastener 12. The walls of the body 30 are relatively thin so that they will buckle under a force applied at opposite ends thereto, thereby producing an axial compression force in the body 30. The thickness of the flange 32 equals about half the thickness of the walls of the body 30.

The body 30 is molded completely around the small, knurled cylinder 26. The knurled surface on the perimeter of the small cylinder 26 provides a gripping force between the body 30 and the end plate 16 to form a permanent union between the two. It will be appreciated by a person skilled in the art that a differently shaped end plate could be connected proximate the end of the tubular body 30 to form an expander 14 that would function in the same manner as the preferred embodiment. For example, an end plate 16 could be formed as a cylinder with a smaller diameter than the outside diameter of the unstressed or relaxed body 30. The body 30 could then be molded completely around the outer periphery of the end plate. The length of the expander 14 is slightly less than the length of the shaft portion 18 of the fastener 12 less the thickness of the workpiece 36, to ensure engagement between the two.

The tubular body 30 of the expander 14 is made of an elastic, resilient material with a high elastic limit. Thus, when a force causing deformation in the material is removed the deformation generally disappears also. In other words, under typical circumstances, no set remains in the tubular body 30 of the expander 14; rather, it returns to its original configuration after a large deformation force is removed. Atypical circumstances include use of the reusable anchor assembly near a source of heat or exposure of the reusable anchor assembly to sunlight for extended periods of time. Even after a use under atypical circumstances, after releasing the deformation force, the expander will eventually relax to a point where the diameter of the relaxed body 30 is less than the diameter of the opening 40.

The material in the tubular body 30 of the expander 14 is also relatively incompressible and has a high

-8-

coefficient of friction. Thus, with increasing loads on the material the force needed to move the material along a surface perpendicular to the line of force is also increased. Furthermore, it is desirable that the material used also have a relatively low critical buckling load characteristic. With a low critical buckling load characteristic a low compression force will cause the thin walls of the expander 14 to buckle or bulge outward. The material used in the preferred embodiment is a polyurethane, however vinyl, rubber or any like material is also suitable. When polyurethane, vinyl, rubber or like materials are used, the anchor also electrically insulates the workpiece 36 from the surface 38.

The fastener 12 and the end plate 16 are made of metal in the preferred embodiment. However, other materials having greater strength and small deformation characteristics, when compared to the material in the tubular body 30 under a similar load, could also be used.

In operation, the expander 14 can be placed within the opening 40 in the mounting surface 38. An opening 44 in the workpiece 36 can be aligned with the opening 42 in the expander 14. The fastener 12 is then inserted through both openings, 42 and 44, and the tubular body 30 to the end plate 16. Alternatively, the fastener 12 can be inserted through the opening 44 in the workpiece 36 and through the expander 14. The expander body 30 and the end plate 16 can then be placed within opening 40 with the workpiece 36 attached thereto.

To complete the mounting, the fastener 12 is turned to engage the end plate 16. The fastener can usually be turned by hand until the length of the shaft 18 between the end plate 16 and the head 20 of the fastener 12 is equal to the thickness of the workpiece 36 and the length of the expander 14. A screwdriver, wrench or other

0161916

-9-

suitable means for turning or applying torque to the fastener is needed to complete the mounting.

Applying torque to the fastener 12 causes the shaft 18 to threadably engage the end plate 16, thereby drawing the end plate 16 toward the workpiece 36. The opposite movement of the expander 14 is prevented because of the engagement of the inner surface 35 of the flange 32 against the surface 38 surrounding the opening 40.

This results in an axial compression force in the body 30. As the fastener is further tightened, the axial compression force on the body 30 of the expander is increased until it reaches the critical buckling load. When the force exceeds the critical buckling load the walls of the body 30 bulge out and away from the shaft 18 of the fastener 12 as shown in FIGURE 2 by phantom lines 46. The lines 46 show only one position of the bulged walls of the body portion 30. It should be understood that the walls bulge further outward as the axial compression force is increased until the walls of the body 30 contact the inside of opening 40 in the mounting surface 38. After contact, further tightening of the reusable anchor assembly produces an expansion force which acts radially outward on the inside surface of the opening 40. The walls of the tubular body 30 or sleeve bulge out around the perimeter of shaft 18 to produce continuous contact with the inside surface of the opening 40 and a uniform pressure on the inside surface. The continuous contact around the opening 40 can seal an opening 40 and restrict fluid flow.

Upon study it can be seen that the reusable anchor assembly is engaged with the opening 38 in a surface 40 after the body 30 undergoes two motions. Both motions occur as the fastener is selectively and threadably engaged with the end plate 16. The first motion occurs when the fastener 12 is further engaged after the flange 32 has abutted the head 20 of the fastener 12. Further

-10-

engagement longitudinally squeezes the expander, or more accurately produces an axial compression force within the body 30 of the expander 14. As the reusable anchor is further tightened, the axial compression force within the body 30 increases until a second motion takes place, that of the body 30 buckling and bulging outward. Further tightening results in the walls bulging further outward or expanding and contacting the inside surface or interior of the opening 40.

This dual action is advantageous in that the inside surface of the opening 40 is subjected only to a radial force. This provides for more ease in installation. The torque needed to install the reusable anchor is less than that needed in other devices. Many other anchor devices work as a wedge and, as a result, a friction force acting along the longitudinal axis of the opening upon the inside surface must be overcome in order to install them. Applying a compression force to the body 30 is much easier than overcoming this friction force. The only force contacting the inside surface of the opening 38 after installation is radiating outward and perpendicular to the inside surface. Other devices, which use a wedging action, not only apply a force which acts radially outward but also also a force which acts longitudinally and parallel to the axis along the inside surface of the opening 40.

Furthermore, it should be understood that the expander 14 remains in compression while it is installed within the opening 40 of the surface 38. This is distinguishable from the prior art anchors in which there is only a temporary compression force which is immediately relieved when the weakened sections of the anchor fail to form the petals, as explained above. Moreover, the anchor assembly of the present invention is effective in holding the workpiece 36 against the surface 38 even if the opening 40 is enlarged for any reason. Under such circumstances, the fastener 12 can simply be turned in order to increase the amount of compression force in the tubular body 30, thereby securing the expander 14 in the opening 40. With the anchors of the prior art, a larger opening 40 would require the disposal of the original anchor and the use of a larger one.

The force applied to the inside surface of the opening 40 is uniform. When the body 30 of the expander 14 bulges outward a continuous surface contact exists with the inside surface of the opening 38. Preferably, the difference between the outside diameter h of the body 30 and the inside diameter of the opening 40 is minimized, so that the anchor assembly will be more effective in holding the workpiece 36.

The resistance to withdrawing the anchor bolt from the opening is directly related to the coefficient of friction of the material of the tubular body 30 and the amount of expansion force on the inside surface of the opening 40. As the expansion force is increased, the friction force which resists the withdrawal of the reusable anchor assembly is also increased.

The inventive anchor assembly disclosed can be used to attach most workpieces 36 to a surface 38 with an opening 40 therein. The opening 40 has an inside diameter which, to work most effectively, is slightly larger than the diameter of the tubular body 30 in its relaxed or unstressed state. With the outside peripheral dimension of the unstressed anchor assembly less than the inside peripheral dimension of the opening 40, the anchor assembly can be inserted with substantially no frictional resistance. The difference between diameters should be small enough, however, so that the expander 14 need bulge outward a small distance before the outside wall of the body 30 contacts the inside surface of the opening 40. For a small anchor assembly the difference between the inside diameter of the opening 40 and the outside diameter h of the body 30 can be as much as 1/16 inch and still anchor the workpiece effectively. The reusable anchor assembly, however, expands and anchors a workpiece 36 in an opening 40 with a much larger diameter. For example a 0.25 inch reusable anchor assembly can be placed within an opening of 0.40 inch, and expanded to successfully hold a workpiece.

As long as the proper ratio of the length to wall thickness of the tubular element is maintained, an expander body with an outside diameter h which is equal to at least 65% of the inside diameter of the opening 40 can hold a workpiece 36 after installation. Preferably, however, to be most effective, the diameter h of the body 30 of the reusable anchor assembly should be at least 80% of the inside diameter of the opening 40 in the surface 38.

In an actual test, a one-half inch expander was utilized in connection with a number 4 sheet metal screw in an anchor assembly. This assembly withstood more than 400 pounds of shear load in a destruction test. The same anchor was tested in a one-half inch thick section of sheetrock and was found to withstand 140 pounds before failure. Of course, larger sizes of expanders could withstand several thousand pounds when anchored within solid substrates. Furthermore, the hoop strength of the opening 40 generally exceeds the torque rating of the fastener used in the anchor assembly. Thus, very little torque is required to install the anchor assembly.

The anchor assembly is also equally effective in holding a workpiece 36 in a hollow surface 38. A hollow surface is one in which the length of the shaft portion 18 of the fastener 12 is greater than the thickness of the mounting surface 38. In fact, the anchor assembly of the present invention can be utilized in connection with virtually any fixture to hold it against virtually any surface comprised of virtually any material having virtually any thickness. Moreover, the expander 14 serves as a leak-tight seal for use in boats or other fluid environments, and also as an electrical insulation device. Furthermore, the expander can dampen any vibration when used as a mounting assembly for motors, engines and the like.

The anchor bolt is reusable because, as mentioned earlier, the material is elastic. Thus, when the axial compression force is released as the fastener is loosened, the body 30 of expander 14 typically returns to its original shape. Generally, no permanent or plastic deformation results from the application of the axial compression force to the body 30. The material in the body 30 of the expander 14 is also resilient. Thus the axial load can be applied to the body 30 numerous times and, when the load is released, the body will regain its original shape.

It should also be noted that different types and sizes of fasteners 12 can be used for various applications which employ the invention disclosed. Furthermore, the body 30 of the expander 14 can be large or small, depending upon the application or use of the reusable anchor bolt.

FIGURES 3 and 4 illustrate an alternate embodiment of the reusable anchor assembly of the present invention in which the expander 48 is comprised of three separately manufactured members. The body 50 is provided with a pair of frustoconical fittings 52 formed on each end including a recessed, annular retention ring 54 sandwiched between the fitting 52 and the body 50. The end plate 56 is manufactured from a non-resilient, preferably metallic, material and has a threaded opening 58 in order to receive the fastener 12 that is shown in cross section in FIGURE 4. The interior of the end plate 56 is hollowed out to form a frustoconical shape to correspond to that of the fitting 52a, and is also provided with an annular lip 62, also shown in FIGURE 4. The end plate 56 is press fit

-14-

onto the distal end of the expander 48 and over the fitting 52a such that the annular lip 62 locks into the retention ring 54a to securely hold the end plate 56 in position. The resiliency of the fitting 52a facilitates the assembly of the end plate 56 by deforming as the end plate 56 is pressed onto it.

The flange 64 is assembled onto the opposite or proximal end of the expander 48 in the same manner just described with respect to the end plate 56. The interior of the flange 64 is also hollowed out in a frustoconical configuration to conform with the fitting 52b and is provided with an annular lip 66 (shown in FIGURE 4) which mates with the retention ring 54b of the fitting 52b. Thus, both the end plate 56 and the flange 64 can be easily assembled onto the opposite ends of the expander 48. This embodiment has the advantage of eliminating the need to load the end plate into the die mold for injection molding of the expander, thus increasing the production rate of the expander portion of the reusable anchor assembly.

The inner surface 68 of the flange 64 engages the surface 38 on which the work piece is being mounted, the mounting surface 38 being represented in FIGURE 4 in dot/dash lines. This inner surface 68 provides a base or support for the anchor assembly in the opening 40 (shown in FIGURE 1) and prevents it from being drawn into the opening as the compression force is exerted on the assembly. The outer surface 70 of the flange 64 engages the work piece 36. The flange 64 is also preferably manufactured from a non-resilient or metallic material.

The flange 64 is provided with a cylindrical body portion 72 which is sufficiently long to enter the opening 40 and has an outer diameter approximately the same as the inner diameter of the opening. Thus, the flange 64 including the body portion 72, when the fastener 12 is in place as shown in FIGURE 4, completely seals off the

-15-

opening and prevents any cold flow of the resilient expander 48. That is, because the expander is manufactured from an amorphous, non-crystalline solid, such as a polymer, it is subject to flow over a period of time. This glassy state, which is caused by the low degree of crystallinity of the expander material, could permit the expander to deform if not prevented by the flange. Likewise, the end plate seals the opposite end of the opening against any flow of the expander, which could reduce the compression force of the expanding and its related holding strength.

The use and operation of the reusable anchor assembly of **FIGURES 3 AND 4** is substantially the same as the embodiment of **FIGURES 1 and 2.** The fastener 12 passes through the expander 48, engages the end plate 56 and, as the fastener 12 is advanced, a compression force is exerted on the expander 48 causing it to bulge outwardly as shown in phantom lines at 48'. The elimination of cold flow passageways, as provided by the non-resilient end plate 56 and flange 64, provides support for the fastener 12 and prevents any sagging or disfiguration in the expander 48.

The invention may be embodied in other specific forms without departing from its spirit or essential characteristics. The described embodiments are to be considered in all respects only as illustrative and not restrictive and the scope of the invention is, therefore, indicated by the appended claims rather than by the foregoing description. All changes which come within the meaning and range of equivalency of the claims are to be embraced within their scope.

-16-

CLAIMS

1.  An apparatus for anchoring an object (36) to a surface (38), the apparatus being adapted to be inserted within a preformed opening (40) in said surface, characterized by:

an expandable, resilient element (14, 48) attachable to said object and insertable within said opening; and

a mechanism (12, 16) for producing an axial compression force within said element in order to cause said element to exert a substantially radial force acting on the inside surface of said opening to prevent the removal of said element from said opening, thereby anchoring said object to said surface.

2.  The apparatus of Claim 1 wherein said mechanism for producing said axial force causes said element to bulge radially outward to engage said inside surface of said opening.

3.  The apparatus of Claim 1 wherein said mechanism for producing said axial compression force is further characterized by an adjustable member (12) and a cooperating member (16, 56) for said adjustable member, wherein said adjustable member and said cooperating member are selectively (i) urged toward one another to apply said compression force in said element, or (ii) separated apart in order to remove said compression force from said element, thereby permitting said element to return to its relaxed state and thus permitting the element to be removable from said opening.

4.  The apparatus of Claim 1 wherein the resiliency of said element permits said apparatus to be reusable.

5.  The apparatus of Claim 1 wherein said element is made from a material having a high coefficient of friction in order to maintain the position of said element within said opening.

-17-

6.   The apparatus of Claim 3 wherein said adjustable member is a threaded fastener, said cooperating means is an end piece which is threadably engaged on said fastener, and said element is a sleeve mounted on said fastener.

7.   The system of Claim 1 wherein the expansion of said element comprises a seal for said opening from the leakage of water or other fluids.

8.   The apparatus of Claim 1 wherein the expansion of said element comprises an electric insulator between said object and said surface.

9.   The apparatus of Claim 1 further characterized by a restraint (64) mounted on said element for maintaining said radial force exerted by said element on said opening.

10.   The apparatus of Claim 9 wherein said restraint is characterized by a mechanism for maintaining the expanded configuration of said element within said opening and preventing its deformation over time.

11.   The apparatus of Claim 9 wherein said restraint comprises nonresilient means for sealing said opening in order to prevent the cold flow of said resilient element.

12.   A method for mounting an object (36) in an opening (40) characterized by the steps of:

placing a sleeve (14, 48) of resilient material in said opening;

attaching said object to said sleeve; and applying a compression force to said sleeve to deform said sleeve so that it urges outward against the walls inside said opening, thereby securely anchoring said object to said opening.

13.   The method of Claim 12 further characterized by the step of sealing said opening to prevent the deformation of said resilient material, thereby maintaining said compression force.

GA-2779/ks
042485

1/2

*Fig. 1*

38

14

32

44

18

20

12

36

42

16

30

33

2

2

40

*Fig. 2*

14

35

33

42

32

26

24

27

28

30

46

34

16

h

0161916

*Fig. 3*

*Fig. 4*